# FASCICULE DE BREVET EUROPEEN

(11) **EP 2 139 740 B1**
(45) Date de publication et mention de la délivrance du brevet: **18.01.2012**
(21) Numéro de dépôt: 08788149.6
(22) Date de dépôt: 09.04.2008
(51) Int. Cl.: B60W 30/18, B60W 30/14, B60W 10/18, B60W 10/06

(54) **SYSTÈME D'AIDE À LA CONDUITE DANS LES PENTES POUR VÉHICULE AUTOMOBILE**
UNTERSTÜTZUNGSSYSTEM ZUM BEFAHREN VON STEIGUNGEN FÜR AUTOMOBILE
ASSISTANCE SYSTEM FOR DRIVING IN SLOPES FOR AUTOMOBILES

(30) Priorité: 12.04.2007 FR 0754437
(43) Date de publication de la demande: 06.01.2010
(73) Titulaire: Peugeot Citroën Automobiles SA, 78140 Vélizy-Villacoublay (FR); Robert Bosch GmbH, 70442 Stuttgart (DE)
(72) Inventeur: BLAISE, Philippe, F-25490 Dampierre Les Bois (FR); CHARPIN, Emmanuel, F-25460 Etupes (FR); JOUCGNOUX, Damien, 37130 Mazieres de Touraine (FR)
(74) Mandataire: Thinat, Michel
(86) Numéro de dépôt international: PCT/FR2008/050627
(87) Numéro de publication internationale: WO 2008/139118

(56) Documents cités:
- EP-A- 0 979 762
- EP-A- 1 777 133
- WO-A-01/14186
- DE-A- 10 250 719
- FR-A- 2 850 069

## Description

La présente invention concerne un système d'aide à la conduite dans les pentes pour véhicule automobile.

Les efforts des constructeurs et équipementiers automobiles ont permis de réaliser des systèmes électroniques toujours plus performants en matière d'aide à la conduite d'un véhicule dans différentes situations de vie, en particulier dans les côtes et les descentes.

On connaît, par exemple, le système d'aide au décollage en côte - connu aussi sous le nom de système de « Hill Assist » - qui maintient, au relâchement de la pédale de frein et pendant un court instant, le véhicule immobilisé (freins serrés), laissant au conducteur le temps de passer de la pédale de frein à la pédale d'accélérateur. Cette fonction ne s'active que lorsque le véhicule a été complètement immobilisé, pied sur la pédale de frein, et à partir d'une certaine inclinaison de la pente.

On connaît également le système de limitation de vitesse en descente - appelé aussi système de « Hill Descent Control » - qui freine automatiquement le véhicule dans les descentes. Il permet de maintenir constante la vitesse du véhicule dans une pente fortement inclinée. Il fonctionne en marche avant comme en marche arrière. Il permet de contrôler la vitesse de chacune des roues en recherchant l'adhérence maximale. Il s'agit aussi d'un élément d'aide à la conduite dans les montées.

D'autres systèmes sont connus de l'art antérieur. Ainsi, par exemple, le document FR 2 850 069 décrit un système de commande de freinage au cours des phases d'arrêt et de mise en mouvement d'un véhicule automobile équipé d'un freinage découplé, qui comprend au moins un capteur mesurant la force appliquée aux roues du véhicule, un capteur de déclivité de l'environnement, un ou des moyens mesurant la demande de freinage du conducteur, une unité électronique de commande, des moyens de calcul de consigne de freinage de maintien à l'arrêt du véhicule quelle que soit la déclivité de l'environnement, des moyens de calcul de consigne de freinage lors d'un démarrage en côte souhaité par le conducteur, des moyens de calcul de consigne de freinage lors d'un démarrage en descente souhaité par le conducteur, et des moyens de calcul de consigne de freinage limitant l'accélération du véhicule, lors de manoeuvres en pente, éventuellement avec le moteur découplé de la transmission. L'unité électronique de commande est capable d'activer chacun desdits moyens de calcul de consigne de freinage successivement ou indépendamment les uns des autres.

Le but de la présente invention est de fournir un système d'aide à la conduite dans les pentes, qui vienne apporter une véritable assistance aux conducteurs de véhicules, en particulier de véhicules automobiles, lors des descentes en marche avant ou arrière en situation de tout terrain « Off Road » ou sur route quelque soit l'adhérence.

Un autre but de la présente invention est de fournir un tel système, qui perfectionne les systèmes connus de l'art antérieur, tels que ceux mentionnés précédemment comme le système d'aide au décollage en côte ou le système de limitation de vitesse en descente.

Un autre but de la présente invention est de fournir un tel système qui soit applicable sur tout véhicule 4 X 4 (couple transmis par les quatre roues) ou 4 X 2 (couple transmis par les roues ou les roues arrières).

Enfin, c'est également un but de la présente invention de fournir un système complet d'aide à la conduite dans les pentes, qui permette aux différents modules embarqués des systèmes connus (module de « Hill Assist » et module de « Hill Descent Control ») de dialoguer ensemble pour offrir une prestation beaucoup plus avancée en termes de sécurité active pour le conducteur du véhicule.

Pour parvenir à ces buts, la présente invention conçoit un nouveau système d'aide à la conduite dans les pentes pour véhicule automobile, qui comprend des capteurs de mesure en continu de grandeurs physiques liées au mouvement du véhicule, un calculateur électronique de correction de trajectoire - ou calculateur ESP - intégrant un module « Hill Assist » d'aide au décollage en côte - désigné aussi module HA dans la suite du présent texte - et un module « Hill Descent Control » de limitation de vitesse en descente - désigné aussi module HDC dans la suite du présent texte-, et des actionneurs commandés par le calculateur ESP pour agir sur différents paramètres de conduite. Le calculateur comprend, de plus, un module « Hill Assist Descent Control » d'aide au contrôle de motricité dans les pentes - désigné aussi module HADC dans la suite du présent texte - qui commande l'entrée en action et la sortie de l'un et l'autre desdits modules HA et HDC selon des lois de commande spécifiques pour la gestion de « situations de vie » intermédiaires entre les situations gérées par le module HA et les situations gérées par le module HDC.

Selon l'invention, le module HADC commande la sortie progressive du fonctionnement du module HA après une durée de fonctionnement de ce dernier supérieure à une durée prédéterminée, et le véhicule étant alors en mouvement, commande l'entrée en action du module HDC si la vitesse du véhicule est supérieure à une vitesse prédéterminée de façon à ralentir le véhicule sur cette vitesse prédéterminée, appelée vitesse de consigne.

Le module HADC reçoit des informations en continu du calculateur de gestion moteur du véhicule.

Les actionneurs comprennent, de préférence, le groupe hydraulique de frein principal du véhicule, et le calculateur de gestion du moteur du véhicule.

Le calculateur dit calculateur ESP comprend, de plus, le régulateur anti-blocage de sécurité (ABS).

Les capteurs de mesure des grandeurs physiques liées au mouvement du véhicule comprennent, de préférence, des capteurs d'accélération longitudinale et transversale, un capteur d'angle du volant et un capteur de la vitesse du véhicule.

La présente invention propose également un véhicule qui est équipé d'un système de correction de trajectoire (ESP) dans les pentes conforme à celui décrit ci-dessus dans ses grandes lignes.

Ce véhicule peut être un véhicule automobile à quatre roues motrices, ou bien un véhicule automobile à deux roues motrices avant et arrière.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est un graphe illustrant un exemple de situation gérée par le système « Hill Assist » d'aide au décollage en côte seulement - référencé HA sur les dessins et désigné aussi « système HA » dans la suite du présent texte -,
- la figure 2 est un graphe illustrant un exemple de situation gérée par le système « Hill Descent Control » de limitation de vitesse en descente seulement - référencé HDC sur les dessins et désigné aussi « système HDC » dans la suite du présent texte -,
- la figure 3 est un schéma de principe de l'architecture du système d'aide à la conduite dans les pentes, selon la présente invention,
- la figure 4 est un organigramme fonctionnel de la logique du système de la présente invention,
- la figure 5 est un graphe illustrant un exemple de situation gérée par le système selon la présente invention,
- la figure 6 est un tableau I de description du fonctionnement d'un système "Hill Assist",

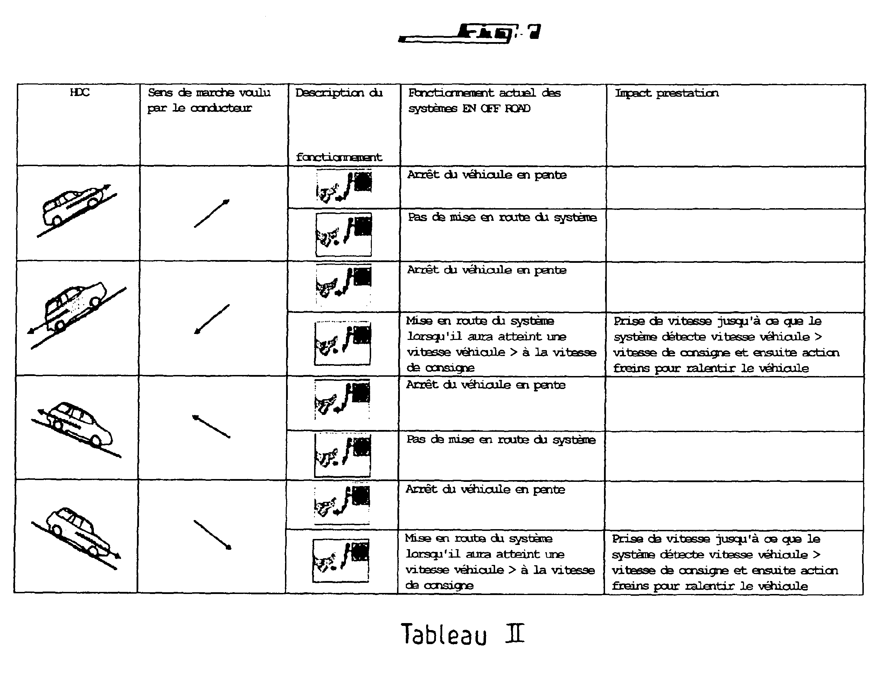

- la figure 7 est un tableau II de description du fonctionnement d'un système "Hill Descent Control", et
- la figure 8 est un tableau III de description du fonctionnement d'un système HADC selon la présente invention.

Comme mentionné précédemment, le système HA d'aide au décollage en côte maintient le véhicule en pente immobile en position pendant un certain temps si le conducteur n'accélère pas lorsque le sens de marche voulu par le conducteur est inverse par rapport au sens de déplacement que prendrait le véhicule s'il n'était pas freiné. La fonction du système HA est d'apporter une aide et une assistance lors des démarrages en côte. Lorsque le sens de marche voulu par le conducteur est le même que celui donné au véhicule par la pente, il n'y a pas de maintien en pente du véhicule, le système HA n'intervient pas : tout se passe comme si la volonté du conducteur était respectée.

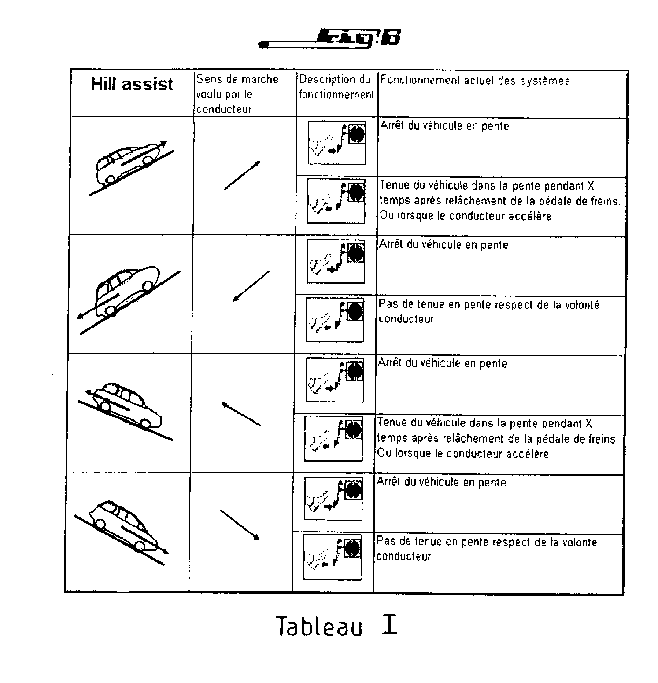

Le fonctionnement du système HA peut se résumer de la manière suivante, dans le tableau I de la figure 6.

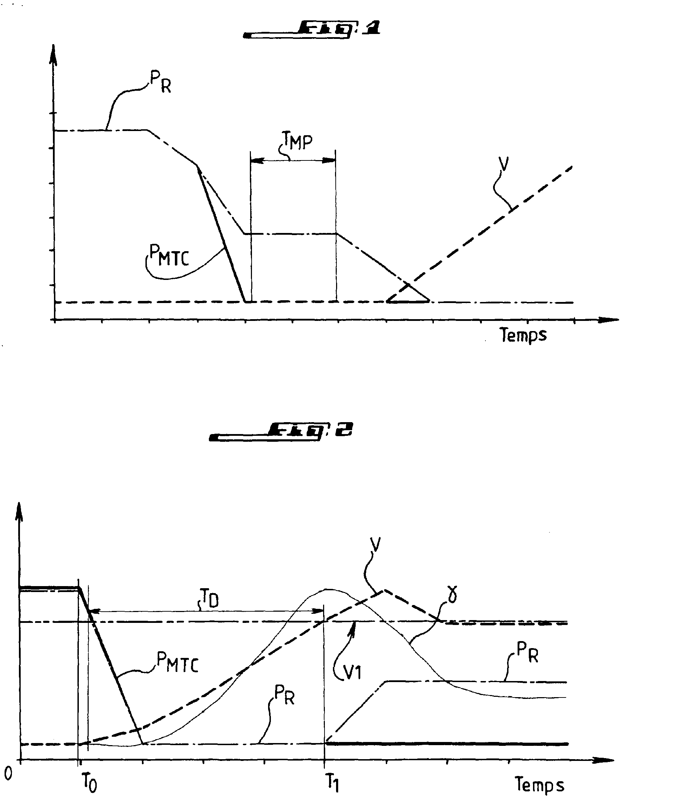

Le graphe de la figure 1 illustre ce fonctionnement, dans une situation dans laquelle le véhicule est en pente montante et la volonté du conducteur est de partir en marche avant, ou bien dans une situation dans laquelle le véhicule est en pente descendante et la volonté du conducteur est de partir en marche arrière. Au relâchement de la pédale de frein, la pression au maître-cylindre P_{MTC} du système de freinage (représentée avec un trait plein) retombe à zéro, tandis que la pression de freinage aux roues P_{R} (représentée en traits interrompus mixtes) se maintient pendant un temps T_{MP} avant que la marche du véhicule reprenne, cette reprise étant illustrée par la courbe V représentative de la vitesse du véhicule en traits interrompus courts.

La fonction du système HDC de limitation de vitesse en descente est différente. Le système HDC maintient, lors d'évolution « off road » du véhicule, la vitesse du véhicule à une valeur constante, en pente descendante ou montante tout en respectant le sens de marche du véhicule (voir dessin tableau 2 : en effet quand pente montante et volonté de faire une marche arrière alors HDC actif) en tenant compte de la volonté du conducteur, lorsque le frein moteur ne le permet plus.

Lorsque le sens de marche voulu par le conducteur est le même que celui donné au véhicule par la seule pente, contrairement au système HA qui n'intervient pas, le système HDC intervient. Cette intervention consiste à fixer la vitesse V du véhicule à une vitesse prédéterminée de consigne V1. Lorsque le sens de marche voulu par le conducteur est inverse de celui donné au véhicule par la seule pente, contrairement au système HA qui dans ce cas, intervient, le système HDC quant à lui n'intervient pas (ceci est vrai sauf dans le cas ou l'on se trouve embrayage ouvert).

Le fonctionnement du système HDC peut se résumer de la manière suivante, dans le tableau II de la figure 6.

Le graphe de la figure 2 illustre ce fonctionnement, dans une situation dans laquelle le véhicule est en pente montante et la volonté du conducteur est de faire une marche arrière, ou bien inversement dans une situation dans laquelle le véhicule est en pente descendante et la volonté du conducteur est de partir en marche avant. Au relâchement de la pédale de frein, la pression au maître-cylindre P_{MTC} (représentée avec un trait plein) retombe à zéro, la pression de freinage aux roues P_{R} (représentée en traits interrompus mixtes) également. Lorsque la vitesse V du véhicule (représentée en traits interrompus courts) atteint une valeur prédéterminée de consigne V1, le système HDC vient « caler » la vitesse V sur cette valeur de consigne avec un temps d'adaptation. La vitesse de consigne V1 est maintenue grâce à l'action de la pression de freinage aux roues P_{R} à partir du temps T₁. La vitesse V part de la valeur 0 au temps T₀ (véhicule immobile) pour atteindre V1 (valeur de consigne du système HDC) du fait de l'accélération γ du véhicule.

Le temps T_{D} représente le temps de démarrage du système HDC pendant lequel il n'y a pas d'assistance au conducteur ; c'est le temps qu'il faut pour que la vitesse V du véhicule atteigne la valeur de consigne V1.

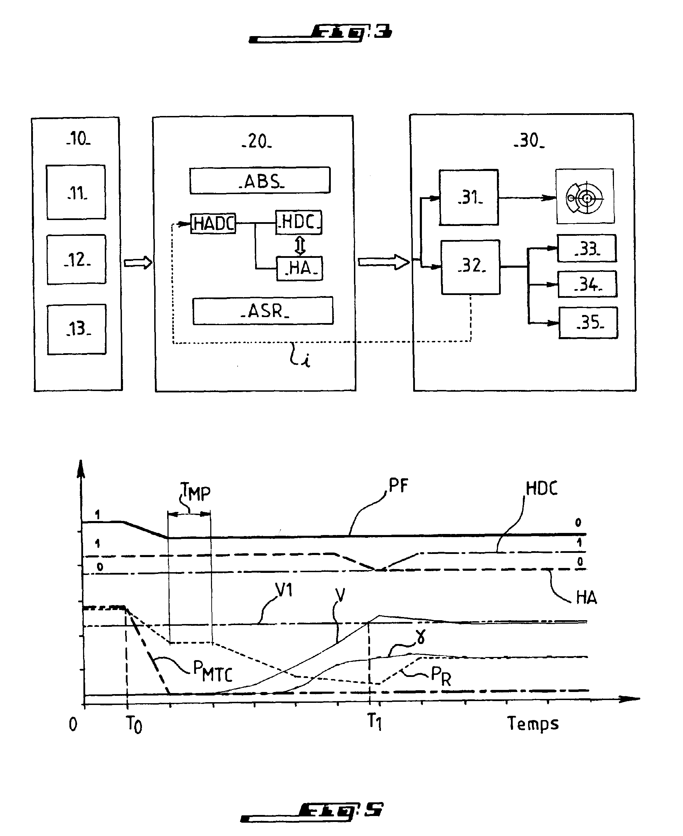

Le système de la présente invention est un système d'aide au contrôle de motricité dans les pentes, dit aussi système « Hill Assist Descent Control » qui est décrit ci-après en référence au schéma de principe de la figure 3.

La référence 10 désigne un ensemble de capteurs de mesure en continu qui fournissent des valeurs d'entrée à un module de type ESP référencé 20, lequel module 20 après traitement desdites valeurs d'entrée alimente des actionneurs désignés sous la référence générale 30.

L'ensemble de capteurs comprend, à titre d'exemple non limitatif de l'objet de l'invention, des moyens de mesure de l'accélération longitudinale et transversale du véhicule, par exemple de type accéléromètre tri axes, référencés 11, un capteur de mesure de l'angle du volant 12 et un capteur de mesure de la vitesse 13 du véhicule.

La référence 20 désigne le calculateur du système ESP, appelé aussi calculateur du correcteur électronique de trajectoire. Le système ESP (ESP est l'acronyme de «Electronic Stability Program ») est un système d'assistance à la conduite qui offre une sécurité dynamique. Des capteurs installés sur chaque roue détectent les pertes d'adhérence et les transmettent au calculateur ESP du type de celui référencé 20 sur la figure 3. Il les confronte à la position du volant et à la vitesse du véhicule. S'il détecte une anomalie, le système ESP va automatiquement accélérer ou freiner la roue en anomalie, afin de redonner de l'adhérence au véhicule et le remettre sur une bonne trajectoire.

Le calculateur 20 comporte les modules suivants :
- un module de régulation du système électronique de sécurité qui, en cas de nécessité, interdit le blocage des roues lors de freinage - ou système ABS (acronyme anglo-saxon pour « Antilock Brake System) référencé comme tel sur la figure 3)
- un module de régulation du système électronique permettant de réduire, et de supprimer éventuellement, le patinage des roues motrices en agissant sur les freins et éventuellement sur la gestion moteur - ou système ASR (acronyme anglo-saxon pour « Anti Split Regulation »), référencé comme tel sur la figure 3.
- un module HDC de limitation de vitesse en descente,
- un module HA d'aide au décollage en côte, et
- un module d'aide au contrôle de motricité dans les pentes, ou module de « Hill Assist Descent Control », référencé HADC sur les figures annexées et désigné module HADC dans la suite du présent texte.

L'ensemble d'actionneurs 30 comporte le groupe hydraulique 31 du circuit de freinage et le calculateur de gestion moteur 32, qui peut piloter le réglage de l'allumage 33, le réglage de l'injection du carburant 34 et le réglage du papillon des gaz 35.

Le module HADC de la présente invention est un module qui permet de faire dialoguer ensemble les modules des systèmes d'aide au décollage en côte HA et de limitation de vitesse en descente HDC. Ce nouveau module HADC commande l'entrée en action et la sortie de l'un et l'autre des deux modules d'aide au décollage en côte HA et de limitation de vitesse en descente HDC selon des lois de commande spécifiques pour la gestion de « situations de vie » intermédiaires entre les situations gérées par le module d'aide au décollage en côte HA et les situations gérées par le module de limitation de vitesse en descente HDC.

L'intervention du module HADC est illustrée sur le schéma de la figure 3 par la boucle d'informations « i » et la sortie du module HADC reliée à l'entrée des modules HA et HDC.

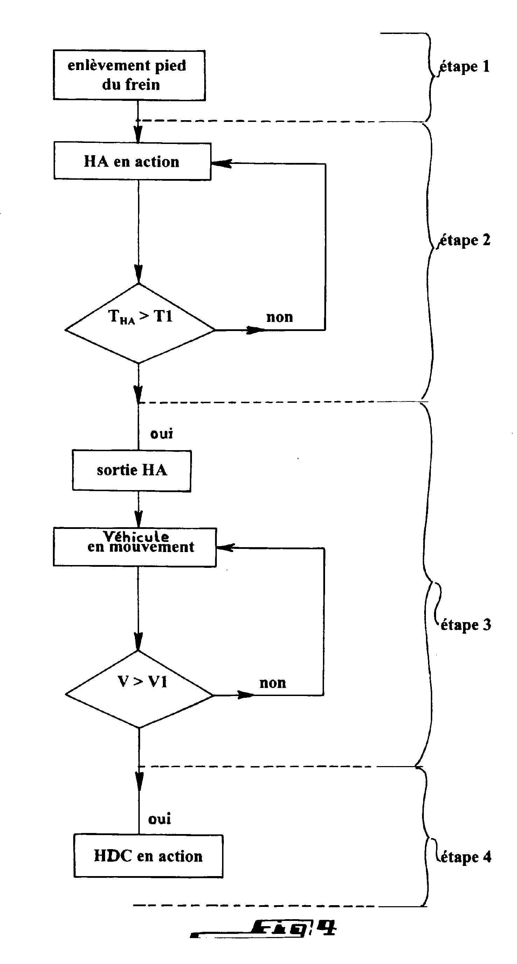

La fonction du module HADC est illustrée par l'organigramme fonctionnel de la figure 4. Les étapes du fonctionnement du système de la présente invention sont les suivantes :
- étape 1 : le conducteur enlève son pied du frein,
- étape 2 : le système HA est mis en action : il assure la tenue en pente du véhicule pendant un temps T_{HA}, et une comparaison de ce temps T_{HA} est faite avec un temps T1 prédéterminé,
   si T_{HA} > T1, alors le système HADC passe à l'étape suivante,
- étape 3 : le système HADC commande la sortie du système HA, cette sortie ayant pour résultat d'entraîner le véhicule en marche à une vitesse V, et compare la vitesse V du véhicule à une vitesse V1 de consigne prédéterminée,
- étape 4 : dés que cette vitesse V atteint la vitesse de consigne V1, le système HADC commande la mise en action du système HDC de limitation de la vitesse en descente.

Le graphe de la figure 5 illustre ce fonctionnement, dans une situation, par exemple, dans laquelle le véhicule est en pente descendante et la volonté du conducteur est de partir en marche avant. Au temps T₀ de relâchement de la pédale de frein (courbe PF au niveau 0), la pression au maître-cylindre P_{MTC} retombe à zéro, tandis que la pression de freinage aux roues P_{R} se maintient pendant un temps T_{MP} avant que la marche du véhicule reprenne illustrée par la courbe V représentative de la vitesse du véhicule sous l'effet de l'accélération donnée γ. C'est le fonctionnement conventionnel du système HA, tel qu'exposé précédemment, représenté par la courbe en traits interrompus courts à deux positions 0 et 1 sur laquelle la position 0 de sortie du système HA coïncide avec le temps T1. Lorsque la vitesse V du véhicule atteint la valeur de consigne V1, le système HDC est mis en action par le système HADC de l'invention. Le système HDC est représenté par la courbe en traits interrompus mixtes à deux positions 0 et 1 sur laquelle la position 1 d'entrée en action coïncide avec le fait que la vitesse du véhicule atteint la vitesse de consigne V1. Le système HDC vient alors « caler » la vitesse V sur cette valeur de consigne V1 dans les conditions exposées précédemment en référence à la figure 2.

Ainsi, il y a combinaison des logiques des deux systèmes HA et HDC. Cette combinaison permet d'assister le conducteur du véhicule dans des situations critiques. Le système HA maintient le véhicule en pente, puis desserre les freins progressivement afin que le véhicule prenne suffisamment de vitesse pour entrer en assistance HDC. Il n'y a plus de sensation d'accélération entre le fonctionnement des deux systèmes d'assistance.

La présente invention propose, par conséquent, un nouveau système qui assiste le conducteur du véhicule automobile à partir des systèmes connus d'aide au décollage en côte (« Hill Assist ») et de limitation de vitesse en descente (« Hill Descent Control »).

Lors d'un démarrage en marche avant et pente ascendante (démarrage en côte) ou bien lors d'un démarrage en marche arrière et pente descendante (le « Hill Assist » du HAD est toujours en action quelque soit le sens de la pente et la volonté du conducteur), il y a maintien du véhicule pendant un temps prédéterminé après relâchement des freins ou lorsque le conducteur accélère, et le système de l'invention permet un changement de rapport de vitesse, donne du temps au conducteur pour placer les roues du véhicule sur la bonne trajectoire dans les secteurs « Off Road » et sur moyenne ou faible adhérence.

Lors d'un démarrage en marche arrière dans une pente ascendante ou bien lors d'un démarrage en marche avant dans une pente descendante, le véhicule est maintenu dans la pente pendant un temps prédéterminé après relâchement de la pédale de frein, et le système de l'invention contrôle la prise de vitesse par le gradient de pression de la fonction de « Hill Assist » jusqu'à ce qu'il détecte que la vitesse du véhicule a atteint la vitesse de consigne et, cette vitesse étant atteinte, il « cale » la vitesse du véhicule sur la vitesse de consigne par des actions de pression sur les freins.

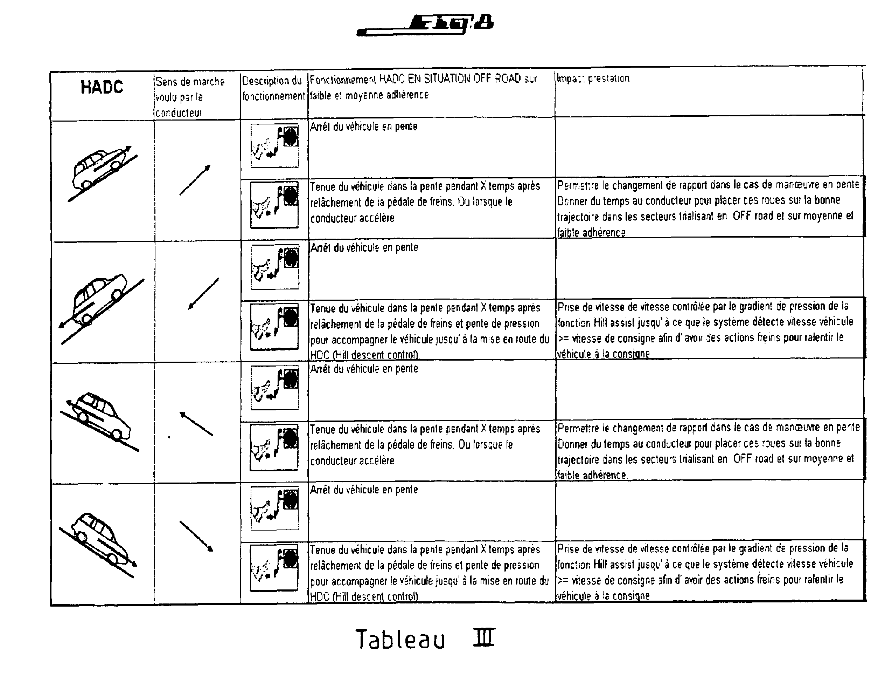

Ce qui peut se résumer de la manière suivante dans le tableau III de la figure 8.

Le système d'aide au contrôle de motricité dans les pentes selon la présente invention est un système de conception simple, d'intégration aisée, fiable et économique du fait qu'il s'appuie sur des systèmes existants et ne nécessite essentiellement que des adaptations en termes de logiciels.

Il apporte confort et sécurité au conducteur du véhicule dans les situations décrites ci-dessus.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Système d'aide à la conduite dans les pentes pour véhicule automobile, qui comprend des capteurs de mesure (11, 12, 13) en continu de grandeurs physiques liées au mouvement du véhicule, un calculateur électronique de correction de trajectoire (20) - ou calculateur ESP - intégrant un module « Hill Assist » d'aide au décollage en côte (HA) et un module « Hill Descent Control » de limitation de vitesse en descente (HDC), et des actionneurs (31 à 35) commandés par le calculateur ESP (20) pour agir sur différents paramètres de conduite, **caractérisé en ce que** le calculateur (20) intègre, de plus, un module « Hill Assist Descent Control » d'aide au contrôle de motricité dans les pentes (HADC) qui commande l'entrée en action et la sortie de l'un et l'autre desdits modules « Hill Assist » (HA) et « Hill Descent Control » (HDC) selon des lois de commande spécifiques pour la gestion de situations de vie intermédiaires entre les situations gérées par le module « Hill Assist » (HA) et celles gérées par le module « Hill Descent Control » (HDC), le module « Hill assist Descent Control » (HADC) commandant la sortie progressive du fonctionnement du module « Hill Assist » (HA) après une durée de fonctionnement (T_{HA}) de ce dernier supérieure à une durée prédéterminée (T1), et le véhicule étant alors en mouvement, commandant l'entrée en action du module « Hill Descent Control » (HDC) si la vitesse (V) du véhicule est supérieure à une vitesse prédéterminée (V1) de façon à ralentir le véhicule sur cette vitesse prédéterminée (V1).

2. Système selon la revendication 1, **caractérisé en ce que** le module « Hill Assist Descent Control » (HADC) reçoit des informations (i) en continu du calculateur de gestion moteur (32) du véhicule.

3. Système selon l'une quelconque des revendications 1 à 2, **caractérisé en ce que** les actionneurs (31 à 35) comprennent le groupe hydraulique (31) de frein principal du véhicule, et le calculateur de gestion du moteur (32).

4. Système selon l'une quelconque des revendications 1 à 3, **caractérisé en ce que** la calculateur ESP (20) comprend, de plus, le régulateur anti-blocage de sécurité (ABS).

5. Système selon l'une quelconque des revendications 1 à 4, **caractérisé en ce que** les capteurs de mesure de grandeurs physiques liées au mouvement du véhicule comprennent des capteurs d'accélération longitudinale et transversale (11), un capteur d'angle volant (12) et un capteur de vitesse (13) du véhicule.

6. Véhicule **caractérisé en ce qu'**il est équipé d'un système conforme à l'une quelconque des revendications 1 à 5.

7. Véhicule selon la revendication 6, **caractérisé en ce qu'**il est un véhicule automobile à quatre roues motrices.

8. Véhicule selon la revendication 6, **caractérisé en ce qu'**il est un véhicule automobile à deux roues motrices à l'avant ou arrière.

## Claims

1. An assistance system for driving in slopes for automobiles, which comprises measurement sensors (11, 12, 13) for continuously measuring physical sizes related to the movement of the automobile, an electronic stability control computer (20) - or ESP computer - incorporating a "Hill Assist" module for assisting with taking off on hills (HA) and a "Hill Descent Control" module for limiting the speed of descent (HDC), and actuators (31 to 35) controlled by the ESP computer (20) to act on different driving parameters, **characterized in that** the computer (20) also incorporates a "Hill Assist Descent Control" module to assist with controlling driveability on slopes (HADC) that controls the entry into action and exit of both of said Hill Assist (HA) and Hill Descent Control (HDC) modules according to specific control laws for managing intermediate life situations between the situations managed by the Hill Assist module (HA) and those managed by the Hill Descent Control module (HDC), the Hill Assist Descent Control module (HADC) controlling the gradual exit from operation of the Hill Assist module (HA) after an operating time (T_{HA}) of the latter longer than a predetermined duration (T1), and the vehicle then being in motion, controlling the entry into action of the Hill Descent Control module (HDC) if the speed (V) of the vehicle is above a predetermined threshold (V1) so as to slow the vehicle on that predetermined speed (V1).

2. The system according to claim 1, **characterized in that** the Hill Assist Descent Control module (HADC) receives information (i) continuously from the engine control unit (32) of the automobile.

3. The system according to any one of claims 1 to 2, **characterized in that** the actuators (31 to 35) comprise the hydraulic group (31) of the service brake of the vehicle, and the engine control unit (32).

4. The system according to any one of claims 1 to 3, **characterized in that** the ESP computer (20) also comprises the anti-lock brake system (ABS).

5. The system according to any one of claims 1 to 4, **characterized in that** the measurement sensors for measuring physical sizes related to the automobile's movement comprise longitudinal and transverse acceleration sensors (11), a wheel angle sensor (12) and a speed sensor (13) of the automobile.

6. An automobile **characterized in that** it is equipped with a system according to any one of claims 1 to 5.

7. The automobile according to claim 6, **characterized in that** it is a four-wheel drive automobile.

8. The automobile according to claim 6, **characterized in that** it is a two-wheel drive automobile using front- or rear-wheel drive.

## Patentansprüche

1. Unterstützungssystem zum Befahren von Steigungen für Kraftfahrzeuge, das Sensoren zum kontinuierlichen Messen (11, 12, 13) physikalischer Größen, die mit der Bewegung des Fahrzeugs verbunden sind, umfasst, einen elektronischen Stabilitätsprogramm-Rechner (20) - oder ESP-Rechner - mit einem "HiIl Assist"-Modul zur Unterstützung beim Anfahren an Steigungen (HA) und einem "HiIl Descent Control"-Modul zur Begrenzung der Geschwindigkeit beim Abfahren (HDC) und Aktuatoren (31 bis 35), die von dem ESP-Rechner (20) gesteuert werden, um auf verschiedene Fahrparameter einzuwirken, **dadurch gekennzeichnet, dass** der Rechner (20) weiterhin ein "HiIl Assist Descent Control"-Modul zur Unterstützung des Antriebs beim Abfahren an Steigungen (HADC) umfasst, das steuert, wann das eine und das andere der "HiIl Assist"- (HA) und "HiIl Descent Control"- (HDC) Module gemäß den speziellen Steuerungsgesetzen zur Verwaltung von Lebenssituationen zwischen den Situationen, die vom "HiIl Assist"-Modul (HA) verwaltet werden und denen, die vom "HiIl Descent Control"-Modul (HDC) verwaltet werden, in Aktion tritt oder diese verlässt, wobei das "HiIl Assist Descent Control"-Modul (HADC) das schrittweise Verlassen der Funktion des "HiIl Assist"-Moduls (HA) nach einer Funktionsdauer (THA) dieses Letztgenannten über einer vorbestimmten Dauer (Tl) steuert, wobei das Fahrzeug dann in Bewegung ist und das Eintreten in Aktion des "HiIl Descent Control"-Moduls (HDC) steuert, wenn die Geschwindigkeit (V) des Fahrzeugs höher ist als eine vorbestimmte Geschwindigkeit (Vl), so dass das Fahrzeug auf diese vorbestimmte Geschwindigkeit (Vl) abgebremst wird.

2. System nach Anspruch 1, **dadurch gekennzeichnet, dass** das "HiIl Assist Descent Control"-Modul (HADC) kontinuierlich Informationen (i) vom Motorsteuergerät (32) des Fahrzeugs erhält.

3. System nach einem der Ansprüche 1 bis 2, **dadurch gekennzeichnet, dass** die Aktuatoren (31 bis 35) die Hauptbremshydraulikgruppe (31) des Fahrzeugs und das Motorsteuergerät (32) umfassen.

4. System nach einem der Ansprüche 1 bis 3, **dadurch gekennzeichnet, dass** der ESP-Rechner (20) weiterhin den Antiblockiersystemregulator (ABS) umfasst.

5. System nach einem der Ansprüche 1 bis 4, **dadurch gekennzeichnet, dass** die Messfühler physikalischer Größen, die mit der Bewegung des Fahrzeugs verbunden sind, Längs- und Querbeschleunigungssensoren (11), einen Lenkradeinschlagwinkelsensor (12) und einen Geschwindigkeitssensor (13) des Fahrzeugs umfassen.

6. Fahrzeug, **dadurch gekennzeichnet, dass** es mit einem System nach einem der Ansprüche 1 bis 5 ausgestattet ist.

7. Fahrzeug nach Anspruch 6, **dadurch gekennzeichnet, dass** es ein Kraftfahrzeug mit vier Antriebsrädern ist.

8. Fahrzeug nach Anspruch 6, **dadurch gekennzeichnet, dass** es ein Kraftfahrzeug mit zwei Antriebsrädern vorn oder hinten ist.
